# EUROPEAN PATENT SPECIFICATION

(11) **EP 1 819 132 B1**
(45) Date of publication and mention of the grant of the patent: **26.11.2008**
(21) Application number: 06075333.2
(22) Date of filing: 13.02.2006
(51) Int. Cl.: H04L 29/12

(54) **Method and system for addressing in relation to multiple applications**
Methode und system zur anwendungsorientierten Addressierung
Méthode et système pour addresser par rapport à multiple applications

(43) Date of publication of application: 15.08.2007
(73) Proprietor: Koninklijke KPN N.V., 2516 CK The Hague (NL)
(72) Inventor: Van Steenbergen, Ate Sander, 9737 NN Groningen (NL); Alberts, Albert Willem, 9745 DH Groningen (NL); Keijzer, Herman, 9727 DN Groningen (NL)
(74) Representative: Wuyts, Koenraad Maria

(56) References cited:
- WO-A-20/06010682
- US-A1- 2002 131 573
- US-A1- 2004 076 139

## Description

### FIELD OF THE INVENTION

This invention relates to a method and system addressing in relation to different types of applications and communications networks.

### BACKGROUND OF THE INVENTION

For communication purposes it is in general required to address a destination to which for instance a communication path is to be set up. A communication path can be set up via several possible types of communications networks, whereby each type of communication network has a corresponding addressing concept. Although there is a tendency to integrate several communications concepts, there are still different addressing concepts in use that differ for instance with regard to the addressing format. Also different types of applications that are available via a communications network may have different formats for addresses. This may even be the case in an integrated environment such as an all-IP communications network. As a consequence, a user does have several addresses associated with him or her, i.e. one address per application. When this user would be addressed by a second user (for instance to set up a connection or to send data or a request), the second user would use an address that is associated to the application in the context of which the connection is to be set up or the data is to be sent (and also associated to the addressed user).

In relation to an all IP network, for instance, a user could have an e-mail address, a URL-address, and an IP telephone number. The second user would use the e-mail address to send an e-mail message, the URL-address to visit the home page of the other user, the SMS address to send an SMS message to the mobile phone of the user, and the IP telephone number to set up a telephone call.

### PROBLEM DEFINITION

A disadvantage of the prior art is that for several types of applications several different addressing formats are used. A disadvantage of this is that relating one user several different addresses are to be collected, stored or remembered by other users. In general, if a user knows an address of another user with regard to a specific application or communications network, the address of that user with regard to another application is not per se known. For instance, if one would know the fixed telephone number of a user the mobile telephone number of that user would not be known.

As a consequence, one would have to know a list of addresses of one user. Which specific address is to be used depends on the application or communications network via which for instance a communication path is to be set up.

Another disadvantage of the prior art is that one should inform other users about address changes. For instance, if an e-mail address changes, this would be communicated to other users. These other users would then update the e-mail address, while leaving unchanged the other addresses of this particular user.

### AIM OF THE INVENTION

It is an object of the invention to eliminate the drawbacks of the prior art and to provide a system and a method for addressing in a multiple application environment.

### SUMMARY OF THE INVENTION

The invention is defined by a method according to claim 1, a server according to claim 6 and an end-user device according to claim 8.

In accordance with this invention, a method for retrieving, by an end-user device comprising application software, an application specific address that is related to a second end-user device or a user is disclosed, the method comprising the steps of:
- sending via a communications network an address-identifier and a code identifying an application from the end-user device to a server;
- selecting by server, based on said address-identifier and said code, an application specific address; and
- sending the selected application specific address from the server to the end-user device.

For accessing an application via the end-user device and via a communications network it is in general required to have application software available at the end-user device. A possible way to address another user within the scope of an application is to start up the appropriate application software at the end-user device and to enter an address that is identifying the other user in relation to the application that is used. For instance, an e-mail application it is required to enter (or select from an address book that is accessible at or via the end-user device) an e-mail address. For another application such as telephony, however, it would be required to start up other application software at the user-device (or to use another end-user device) and also to use another (i.e. telephony specific) address to address the other user.

In a first aspect of the invention is disclosed that an address-identifier can be sent, in order to retrieve an application specific address, from an end-user device to a server that is accessible by the end-user device via a communications network. The identifier can be a numeral or alpha-numeric code that is associated with a end-user or end-user device that is to be addressed. The server may contain (or has accessible) a database in which one or more application specific addresses of a particular user are associated to the address-identifier. It is also possible that a code that identifies the application in relation to which another user is to be addressed is sent to the server together with the address-identifier. The determination of the appropriate application specific address then depends on both the address-identifier and this code.

The communication between the end-user device and the server may also take place via another communications network than that is used to access an application from the end-user device. In such a case, the end-user device receives an application specific address via one communications network after which the end-user device uses this application specific address to access an application via another communications network.

An advantage of the present invention is that it is not required for an end-user to remember or store several application specific addresses of a particular other user, but instead of this only to remember or to store one address-identifier for each particular end-user.

In another aspect of the present invention the server may be accessible for an end-user (for instance via a personal computer or any other end-user device) in order to e.g. create, change or delete one or more application specific addresses. It may also be possible that this end-user defines rules with regard to one or more application specific addresses. For instance, it could be that there are more than one application specific addresses for one application. A rule could then be defined that during a certain time-interval a certain application specific address is selected while during another time-interval another application specific address is to be selected (for instance during office time a business e-mail address and in the evening or night a private e-mail address). Security measures (e.g. authentication and authorization procedures) could be taken to ensure that a user is able to change only his own application specific addresses, rules, and black or white lists, etc.

An advantage of the present invention is that it is not required for an end-user to remember or store several application specific addresses of a particular other user, but instead of this only to remember or to store one address-identifier for each particular end-user.

In yet another aspect of the present invention application software residing at the end-user device automatically retrieves the application specific address is retrieved from the server. In other words, the end-user needs not first to retrieve the appropriate application specific address using an address-identifier and then using this application specific address to address another user in the context of a specific application (for instance, there could be a dedicated application for retrieving an application specific address based on an address-identifier). Instead of this, the application specific address can automatically be retrieved by the application software residing at the end-user device when an end-user enters or selects an address-identifier.

A server is disclosed for providing an application specific address to an end-user device when an address-identifier and a code identifying an application are received. The server may comprise a database in which application specific addresses are associated to address-identifiers and codes that identify the application for which the addressing is required. The server may also comprise means for creating, updating and/or deleting address specific identifiers.

An end-user device is disclosed via which an address-identifier and a code identifying an application can be sent to the server in order to retrieve an application specific address.

US patent application 2002/0131573 discloses an active user registry system. The system brokers between a subscriber's request for a communications option and a user's preferences of being reached by various communications alternatives.

US patent application 2004/0076139 discloses a method for a communication device to send a unique string identifier to a Wireless Name Service (WNS) Server. The server responds to the communication device with information that is associated with the string identifier in a WNS Registry.

### BRIEF DESCRIPTION OF THE DRAWING FIGURE

The foregoing aspects and many of the attendant advantages of this invention will be explained by reference to the following detailed description, when taken in conjunction with the accompanying drawing, wherein:
FIG. 1 is a block diagram illustrating an architecture according to an embodiment of the invention.
FIG. 2 depicts a flow chart illustrating the process of retrieving an application specific address.

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing form the true spirit of the invention, the scope of the invention being limited only by the appended claims as finally granted.

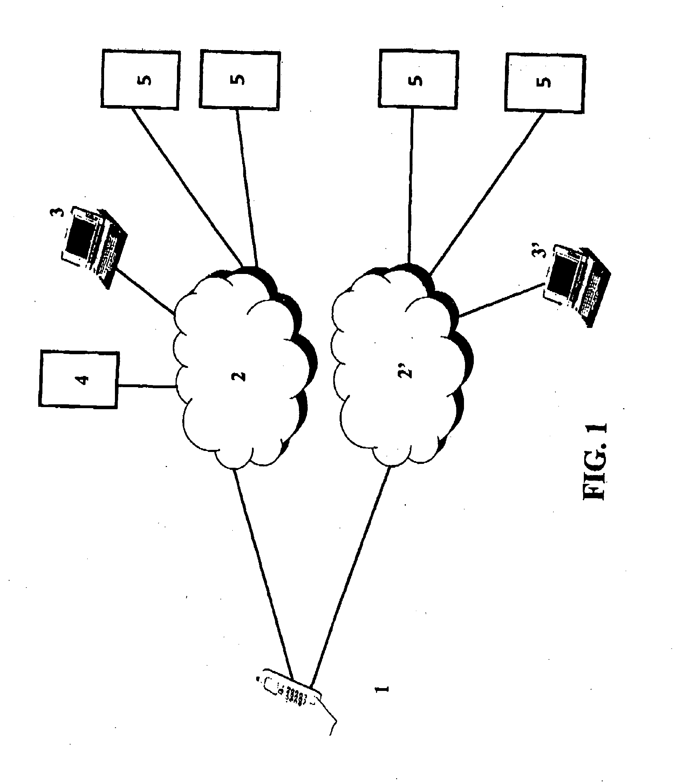

In FIG. 1 an architecture according the invention is depicted, in which an end-user device (1) is depicted via which one or more applications (5) can by used. These applications are provided via a communications network (2, 2'). Access from the end-user device (1) to the communications network (2, 2') can by means of every known access network (for instance fixed, mobile, blue tooth, or broadband). An application (5) may also be integrated in the communications network (2, 2') instead of residing outside the communications network (2, 2') on for instance a host computer that is connected to the telecommunications network (2, 2'). It is also possible that an application (5) is distributed among a host computer connected to the communications network (2, 2'), the communications network (2, 2') and the end-user device (1).

In some embodiments there may be several communications networks (2, 2'), whereby the end-user device (1) selects the appropriate communications network (2, 2') depending on the application (5) to be used by the user. For instance, certain applications (5) may be used via a GSM network, while other applications (5) may require a UMTS network. An application (5) may play a role in the communication between the end-user device (1) and a second end-user device (3) of the addressed user. For instance, an application (5) may be an e-mail application where an e-mail message is sent to (for instance a SMTP, Simple Mail Transfer Protocol, server) via the end-user device (1). The e-mail message can then be retrieved by the addressed user (for instance via a POP, Post Office Protocol, server).

In FIG. 1 a situation is depicted that some applications (5) are accessible via communications network (2) and other applications (5) are accessible via communications network (2'). However, many other situations may also occur. Each application (5) may for instance be accessible via the same communications network (2). In another situation it might also be so that each application (5) is accessible via a dedicated communications network (5).

For accessing an application (5) via the end-user device (1) it is in general required to have application software available at the end-user device (1). A possible way to address another user within the scope of an application is to start up the appropriate application software at the end-user device (1) and to enter an address that is identifying the other user in relation to the application that is used. For instance, an e-mail application it is required to enter (or select from an address book that is accessible at or via the end-user device (1)) an e-mail address. For another application such as telephony, however, it would be required to start up other application software at the user-device (1). Further it would be required to enter (or select) the telephony number of the other user (instead of an e-mail address). The e-mail address and the telephony number of one particular user are in not related to each other; the only relation that may exist is that these addresses are filled together in a database at the end-user device. For instance, in an address book there may exist several addresses for one particular user.

According to the invention there is a server (4) that is accessible by the end-user device (1) via a communications network (2). An address-identifier can be sent by the end-user device (1) to the server (4). The identifier can be a numeral or alpha-numeric code that is associated with a user or end-user device. The server (4) contains (or has accessible) a database in which one or more application specific addresses of a particular user are associated to the address-identifier.

The server (4) may be accessible for an end-user (for instance via a personal computer or any other end-user device) in order to e.g. create, change or delete one or more application specific addresses. It may also be possible that this end-user defines rules with regard to one or more application specific addresses. For instance, it could be that there are more than one application specific addresses for one application. A rule could then be defined that during a certain time-interval a certain application specific address is selected while during another time-interval another application specific address is to be selected (for instance during office time a business e-mail address and in the evening or night a private e-mail address). There could also be black lists (with users that are not allowed) or white lists (with users that are allowed) at the server (4) that can be defined (and changed) in order to determine which users may be allowed to receive an application specific address from the server (4). Security measures (e.g. authentication and authorization procedures) could be taken to ensure that a user is able to change only his own application specific addresses, rules, and black or white lists, etc.

An advantage of the present invention is that a user only needs to remember (or to have stored) the address-identifier of a particular user instead of a whole range of application specific addresses. When an address-identifier is entered or selected at the end-user device (1), the address-identifier is sent to the server (4) together with a code that identifies the application in relation to which another user is to be addressed. The address-identifier can for instance be entered via the keyboard of the end-user device (1). The address-identifier can also be selected, for instance from a list comprising address-identifiers that resides at the end-user device (1) or centrally in the communications network (2, 2'). It can be user-friendly to associate so-called display names (e.g. the full names of the users) to the address-identifiers, which display names are easy to remember and/or understand from the point of view of the end-user. This can be useful if the address-identifiers are more or less randomly chosen codes that are difficult to interpreted by end-users. If a display name is entered or selected by the end-user, the associated address-identifier would then be determined and sent to the server (4) as explained above.

After having received the address-identifier and the code identifying the application, the server (4) will look up a corresponding application specific address. The application specific address, for instance a mobile telephone number or an URL-address, will then be sent by the server (4) to the end-user device (1). At the end-user device the application specific address can be used within an application to communicate or to share information between users. For instance, the user starts an application at the end-user device (1) and uses the application specific address that was retrieved earlier. The server (4) may be accessible via different types of protocols.

In an embodiment of the invention it may be possible that from a specific application automatically the appropriate application specific address is retrieved from the server (4). When a user starts up an application at the end-user device (1), this application might ask for an address-identifier. After an address-identifier is entered (or selected) this application software automatically sends the address-identifier to the server (4) together with the code that identifies the application in relation to which another user is to be addressed. The application specific address is then received by the end-user device (1) in a manner as described above, after which the application. An advantage of this embodiment is that the user is not required to first retrieve an application specific address before using an application.

The application software at the end-user device (1) and/or the centrally residing application software may comprise functions for requesting the user of the user-device (1) for an address-identifier. There may also be comprised functions for sending the code that identifies the application in relation to which another user is to be addressed.

In another embodiment it may also be possible that the address identifier is an application specific address. For instance, the address identifier is an e-mail address. This e-mail address is then associated at the server (4) with the other application specific addresses of a particular user. It is then for instance possible to retrieve a mobile telephone number of a user if the e-mail of that user is known.

At the end-user device (1) a so-called display name may be used that is associated to an address-identifier. This would be convenient for the user since a display name is relatively easy to recognize and to remember.

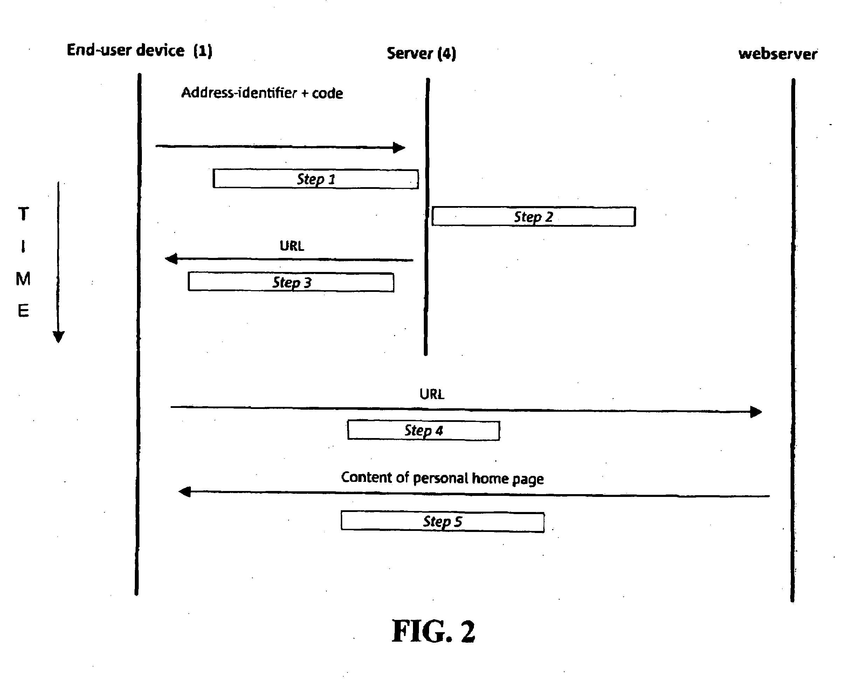

FIG. 2 contains a flowchart that illustrates as a possible embodiment according the present invention. In this embodiment the end-user device (1) is a personal computer that is connected to the Internet. The user that uses the end-user device (1) intends to access a personal home page of another user (residing on a webserver), and has available the address-identifier of that user. When the HTML browser software at the end-user device (1) is started up and the connection with the Internet is set up, it is possible to enter the address-identifier that corresponds to the other user. It is for example possible that plug-in software can be activated that asks for an address-identifier. The address-identifier and a code identifying the HTML browser are then sent to the server (4) (**step 1**)**.** At the server (4) it is then determined which application specific address (in this case a URL) corresponds to the received address-identifier and code (**step 2**). The resulting URL is then sent to the end-user device (1) (**step 3**). After having received the URL, the URL is used by the HTML browser to address the home page of the other user (**step 4**); i.e. the URL will be sent to a domain name server that translates the URL into an IP-address (which is a standard procedure). The content of the addressed home page will then be sent to the end-user device (1) (**step 5**).

## Claims

1. A method for retrieving, by an end-user device (1) comprising application software, an application specific address that is related to a second end-user device (3) or a user the method comprising the steps of:
- sending via a communications network (2) an address-identifier (5) from the end-user device (1) to a server (4);
- selecting by server (4), based on said address-identifier, an application specific address; and
- sending the selected application specific address from the server (4) to the end-user device (1),
**characterized in that** the sending via a communications network (2) from the end-user device (1) to a server (4) further comprises sending a code identifying said application software, and that the selecting by server (4) is further based on said code.

2. Method according to claim 1, whereby the application software prompts a user to enter or select the address-identifier, and the application software also receives the selected application specific address.

3. Method according to claim 1, whereby the address-identifier is a further application specific address.

4. Method according to claim 3, whereby the application specific address is an e-mail address.

5. Method according to any of the preceding claims, whereby the application specific address associated to an address-identifier can be created, updated or deleted via an end-user device and via the communications network (2).

6. A server (4) for providing an application specific address, the server (4) comprising means for receiving an address-identifier, and means for selecting an application specific address based on said address identifier, **characterized in that** the receiving further comprises receiving a code identifying an application software comprisable in an end user device, and that the selecting is further based on said code.

7. Server (4) according to claim 6, the server (4) comprising means for creating, updating or deleting the application specific identifier.

8. An end-user device (1) for accessing one or more applications (5) via a communications network (2), the end-user device (1) comprising application software, means for prompting a user to enter or select an address-identifier means for sending, via a communications network (2), the address-identifier to a server (4), and means for receiving an application specific address from the server (4), **characterized in that** the sending further comprises sending a code identifying said application software.

## Patentansprüche

1. Verfahren, durch das eine Endbenutzereinrichtung (1), die Anwendungssoftware umfaßt, eine anwendungsspezifische Adresse abruft, die mit einer zweiten Endbenutzereinrichtung (3) oder einem Benutzer in Beziehung steht, wobei das Verfahren die folgenden Schritte umfaßt:
- Senden einer Adressenkennung (5) von der Endbenutzereinrichtung (1) zu einem Server (4) über ein Kommunikationsnetz (2);
- Auswählen einer anwendungsspezifischen Adresse durch den Server (4) auf der Basis der Adressenkennung; und
- Senden der gewählten anwendungsspezifischen Adresse von dem Server (4) zu der Endbenutzereinrichtung (1), **dadurch gekennzeichnet, daß** das Senden von der Endbenutzereinrichtung (1) zu einem Server (4) über ein Kommunikationsnetz (2) ferner umfaßt, einen Code zu senden, der die Anwendungssoftware identifiziert, und daß das Auswählen durch den Server (4) ferner auf dem Code basiert.

2. Verfahren nach Anspruch 1, wobei die Anwendungssoftware einen Benutzer zur Eingabe oder Auswahl der Adressenkennung auffordert und die Anwendungssoftware auch die gewählte anwendungsspezifische Adresse empfängt.

3. Verfahren nach Anspruch 1, wobei die Adressenkennung eine weitere anwendungsspezifische Adresse ist.

4. Verfahren nach Anspruch 3, wobei die anwendungsspezifische Adresse eine Emailadresse ist.

5. Verfahren nach einem der vorhergehenden Ansprüche, wobei die mit einer Adressenkennung assoziierte anwendungsspezifische Adresse über eine Endbenutzereinrichtung und über das Kommunikationsnetz (2) erzeugt, aktualisiert oder gelöscht werden kann.

6. Server (4) zum Bereitstellen einer anwendungsspezifischen Adresse, wobei der Server (4) Mittel zum Empfangen einer Adressenkennung und Mittel zum Auswählen einer anwendungsspezifischen Adresse auf der Basis der Adressenkennung umfaßt, **dadurch gekennzeichnet, daß** das Empfangen ferner umfaßt, einen Code zu empfangen, der eine in einer Endbenutzereinrichtung umfassbare Anwendungssoftware identifiziert, und daß das Auswählen ferner auf dem Code basiert.

7. Server (4) nach Anspruch 6, wobei der Server (4) Mittel zum Erzeugen, Aktualisieren oder Löschen der anwendungsspezifischen Kennung umfaßt.

8. Endbenutzereinrichtung (1) zum Zugreifen auf eine oder mehrere Anwendungen (5) über ein Kommunikationsnetz (2), wobei die Endbenutzereinrichtung (1) folgendes umfaßt: Anwendungssoftware, Mittel zum Auffordern eines Benutzers zur Eingabe oder Auswahl einer Adressenkennung, Mittel zum Senden der Adressenkennung zu einem Server (4) über ein Kommunikationsnetz (2) und Mittel zum Empfangen einer anwendungsspezifischen Adresse von dem Server (4), **dadurch gekennzeichnet, daß** das Senden ferner umfaßt, einen Code zu senden, der die Anwendungssoftware identifiziert.

## Revendications

1. Procédé de récupération, grâce à un dispositif d'utilisateur final (1) comprenant un logiciel d'application, d'une adresse spécifique à une application qui se rapporte à un second dispositif d'utilisateur final (3) ou à un utilisateur, le procédé comprenant les étapes consistant à :
- envoyer, par l'intermédiaire d'un réseau de communications (2) un identificateur d'adresse (5) depuis le dispositif d'utilisateur final (1) jusqu'à un serveur (4),
- sélectionner, grâce au serveur (4), sur la base dudit identificateur d'adresse, une adresse spécifique à une application, et
- envoyer, depuis le serveur (4) jusqu'au dispositif d'utilisateur final (1), l'adresse spécifique à l'application sélectionnée,
**caractérisé en ce que** l'envoi par l'intermédiaire d'un réseau de communications (2), depuis le dispositif d'utilisateur final (1) jusqu'au serveur (4), comprend en outre l'envoi d'un code identifiant ledit logiciel d'application et **en ce que** la sélection par le serveur (4) est en outre fondée sur ledit code.

2. Procédé selon la revendication 1, grâce auquel le logiciel d'application invite un utilisateur à saisir ou à sélectionner l'identificateur d'adresse, et grâce auquel le logiciel d'application reçoit également l'adresse spécifique à l'application sélectionnée.

3. Procédé selon la revendication 1, grâce auquel l'identificateur d'adresse représente l'adresse spécifique à une autre application.

4. Procédé selon la revendication 3, grâce auquel l'adresse spécifique à l'autre application est une adresse de messagerie électronique.

5. Procédé selon l'une quelconque des revendications précédentes, grâce auquel l'adresse spécifique à l'application, associée à un identificateur d'adresse, peut être créée, mise à jour ou supprimée par l'intermédiaire d'un dispositif d'utilisateur final et par l'intermédiaire du réseau de communications (2).

6. Serveur (4) destiné à fournir une adresse spécifique à une application, le serveur (4) comprenant un moyen pour recevoir un identificateur d'adresse et un moyen pour sélectionner une adresse spécifique à une application fondée sur ledit identificateur d'adresse, **caractérisé en ce que** la réception comprend en outre la réception d'un code identifiant un logiciel d'application pouvant être composé dans un dispositif d'utilisateur final, et **en ce que** la sélection est en outre fondée sur ledit code.

7. Serveur (4) selon la revendication 6, le serveur (4) comprenant un moyen pour créer, mettre à jour ou supprimer l'identificateur spécifique à l'application.

8. Dispositif d'utilisateur final (1) permettant d'accéder à une ou plusieurs applications (5) par l'intermédiaire d'un réseau de communications (2), le dispositif d'utilisateur final (1) comprenant un logiciel d'application, un moyen permettant d'inviter un utilisateur à saisir ou à sélectionner un identificateur d'adresse, un moyen pour envoyer, par l'intermédiaire d'un réseau de communications (2), l'identificateur d'adresse à un serveur (4), ainsi qu'un moyen permettant de recevoir une adresse spécifique à une application en provenance du serveur (4), **caractérisé en ce que** l'envoi comprend en outre l'envoi d'un code identifiant ledit logiciel d'application.
